# EUROPEAN PATENT SPECIFICATION

(11) **EP 4 480 161 B1**
(45) Date of publication and mention of the grant of the patent: **19.08.2026**
(21) Application number: 23711626.4
(22) Date of filing: 21.02.2023
(51) Int. Cl.: H04L 65/752, H04L 65/75, H04L 65/80

(54) **METHOD AND APPARATUS FOR RATE CONTROL OF SINGLE QUALITY MEDIA STREAMS IN SELECTIVE FORWARDING UNITS**
VERFAHREN UND VORRICHTUNG ZUR RATENSTEUERUNG VON EINZELQUALITÄTSMEDIENSTRÖMEN IN SELEKTIVEN WEITERLEITUNGSEINHEITEN
PROCÉDÉ ET APPAREIL DE COMMANDE DE DÉBIT DE FLUX MULTIMÉDIAS DE QUALITÉ UNIQUE DANS DES UNITÉS DE TRANSFERT SÉLECTIF

(30) Priority: 18.02.2022 US 202263311676 P
(43) Date of publication of application: 25.12.2024
(73) Proprietor: Vonage Business Inc., Holmdel, NJ 07733 (US)
(72) Inventor: ALVAREZ-CORTES, Sara, 08010 Barcelona (ES); BERSIER, Andres, 08037 Barcelona (ES); PATRICIELLO, Natale, 08019 Barcelona (ES)
(74) Representative: AWA Sweden AB
(86) International application number: PCT/US2023/013462
(87) International publication number: WO 2023/158863

(56) References cited:
- US-B1- 9 712 570
- GENG RUOLIN ET AL: "Bitrate Adaptive Scheme in Real-time Video Conference System", 2021 IEEE 11TH INTERNATIONAL CONFERENCE ON ELECTRONICS INFORMATION AND EMERGENCY COMMUNICATION (ICEIEC)2021 IEEE 11TH INTERNATIONAL CONFERENCE ON ELECTRONICS INFORMATION AND EMERGENCY COMMUNICATION (ICEIEC), IEEE, 18 June 2021 (2021-06-18), pages 44 - 47, XP033935331, DOI: 10.1109/ICEIEC51955.2021.9463840
- PETRANGELI STEFANO ET AL: "Dynamic video bitrate adaptation for WebRTC-based remote teaching applications", NOMS 2018 - 2018 IEEE/IFIP NETWORK OPERATIONS AND MANAGEMENT SYMPOSIUM, IEEE, 23 April 2018 (2018-04-23), pages 1 - 5, XP033371664, DOI: 10.1109/NOMS.2018.8406217

## Description

### BACKGROUND

### Field

Embodiments of the present principles generally relate to sender-side rate control and bandwidth estimation in communication systems and more specifically to a method and apparatus for using sender-side rate control in non-RTCP-terminating connections through a publisher limitation strategy that uses a subscribers' target bitrate estimation.

### Description of the Related Art

Current audio and video conferencing systems have, at their core, a Selective Forwarding Unit (SFU), which receives and forwards audio and video streams from and to each participant via separate outgoing channels for each client. In group calls, any sender (or publisher) will use the SFU as a relay to reach receivers (or subscribers). Once an incoming stream from publishers is received, additional latency introduced by an SFU must be small, otherwise, the group call quality may be insufficient for any meaningful real-time communication.

Conventionally, the term "rate-control" is used to describe the act of discovering the usable maximum data rate (bandwidth estimation) towards any subscriber, and multiple factors must be taken into account, such as the variability of the connection or the congestion events caused by concurrent flows. A typical rate control/estimation process begins with a minimum rate, and then increase it based on a parameter combination until this combination shows signs of problems (e.g., congestion), at which point a rollback in rate is implemented. Once the problems are resolved, the rate can start to increase again, in a loop that tries to constantly and carefully adjust how much data is communicated.

A bandwidth estimation strategy is fundamental for the communication because the SFU cannot modify the stream that it is receiving from the publisher. The SFU has to receive a stream from the publisher with a low enough bitrate to fit the available bandwidth between the SFU and any given subscriber. To fit the available bandwidth between the SFU and any given subscriber, an SFU can notify the publisher of a maximum allowed bitrate, which will be the lowest of the bandwidth estimations between the SFU and each subscriber (non-simulcast). For this type of communication, every time a new participant joins the session, the bitrate sent to the rest of the subscribers goes down to an initially allowed bandwidth. In some implementations, and in the particular context of receiver-side rate-control in RTP, a limitation message, e.g., the Receiver Estimated Maximum Bitrate (REMB) is communicated to a publisher. However, such messages are typically inaccurate.

Existing bandwidth estimation strategies are classified into two groups: receiver-side and sender-side. In their most basic form, both work between two single end-points, i.e., these are not designed at the base as multi-party congestion control algorithms. In the first group, the subscriber communicates back to the sender an estimated bandwidth through a limitation message, e.g., the Receiver Estimated Maximum Bitrate (REMB), taking into account the received data stream and properties (including, but not limited to, incoming rate, packet loss, latencies, jitter). In the second group, it is the sender that estimates the bandwidth by using the receiver's feedback, called transport-cc, for adjusting the rate. The feedback includes packet reception timestamps, among other indicators, providing a complete picture for selecting the sender's target rate. The target rate is the output of the entire process of bandwidth estimation, and it is the desired output bitrate towards the selected subscriber.

For media communications mediated by a translating SFU, there are two available techniques for mixing the two previously mentioned rate control algorithms. The first is called Receiver-side, which is the use of the receiver-side strategy in the whole path. The SFU collects the bandwidth estimation coming from the subscribers (e.g., through REMBs) and all receiver reports coming from all the connected subscribers and then, following an aggregation metric rule (e.g. the one with the lowest estimated bitrate), it selects which REMB and receiver report data are forwarded to the publisher (REMB-forwarding procedure). The second, called Half sender-side, is the usage of sender-side between the publisher and the SFU, allowing the publisher to probe the available bandwidth and to decide the best bitrate based on the timing feedback provided by the SFU. However, as the sender-side is originally designed to operate between two endpoints, there is no method for merging two or more timing feedbacks into one.

Another consideration is that a publisher may initiate and perform probing techniques. However, even if the probing packets effectively reach the subscribers, those probing are confined to the link between the publisher and the SFU. The reason lies in the fact that the SFU cannot distinguish between regular padding or padding used to perform a probe, as such the SFU cannot register those output packets as a probe to later interpret the subscriber's timing feedback to generate a target bitrate estimation. Therefore, there currently exists no way of merging two (or more) timing feedbacks. However, even if such a method existed, the publisher decides when and how to perform those probes without any information on the connected subscribers. As such, a probe can be initiated when there are no subscribers (just having the SFU as receiver) with subscribers joining later, or a subscriber can join after a probe has just been recently done. As such using a full sender-side technique in the SFU as defined for pure operation from a publisher and a receiver is not practical.

As such, although there exist individual techniques for determining a bandwidth estimation between a publisher and an SFU and between the SFU and subscribers, there currently does not exist a technique for determining an end-to-end bandwidth estimation (e.g., rate-control) from publishers to subscribers so that a global optimization of the bitrate can be performed.

### SUMMARY

Methods and apparatuses for full sender-side rate-control between publishers, an SFU, and subscribers are provided herein.

In some embodiments a method for full sender-side rate-control includes receiving a data stream at a forwarding unit, determining a bandwidth estimation for communicating the data stream between the forwarding unit and a sender of the data stream, determining respective bandwidth estimations for communicating the data stream between the forwarding unit and at least two receivers, aggregating the bandwidth estimations determined for communicating the data stream between the forwarding unit and the at least two receivers, and limiting the bandwidth estimation determined for communicating the data stream between the forwarding unit and the sender of the data stream based on the aggregated bandwidth estimations. In some embodiments, the bandwidth estimation determined for communicating the data stream between the forwarding unit and the sender of the data stream is limited by communicating a limitation message regarding the aggregated bandwidth estimation of the receivers to the sender.

In some embodiments an apparatus for full sender-side rate-control includes a publisher peer connection module configured to receive a data stream and determine a bandwidth estimation for communicating the data stream between the publisher peer connection module and a sender of the data stream. The apparatus further includes at least two subscriber peer connection modules, each of the at least two subscriber peer connection modules configure to determine a respective bandwidth estimation for communicating the data stream between the forwarding unit and at least one of two receivers. The apparatus further includes an aggregator module configured to aggregate the bandwidth estimations determined for communicating the data stream between the at least two subscriber peer connection modules and the at least two receivers and communicate information regarding the aggregated bandwidth estimations to the sender to limit the bandwidth estimation determined for communicating the data stream between the publisher peer connection module and the sender of the data stream.

In some embodiments, an apparatus for full sender-side rate control includes a processor and a memory coupled to the processor, the memory having stored therein at least one of programs or instructions executable by the processor. In such embodiments, the apparatus, upon execution of the programs or instructions, is configured to receive a data stream at the apparatus, determine a bandwidth estimation for communicating the data stream between the apparatus and a sender of the data stream, determine respective bandwidth estimations for communicating the data stream between the apparatus and at least two receivers, aggregate the bandwidth estimations determined for communicating the data stream between the apparatus and the at least two receivers, and limit the bandwidth estimation determined for communicating the data stream between the apparatus and the sender of the data stream based on the aggregated bandwidth estimations.

Other and further embodiments of the present principles are described below.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1 depicts a high-level block diagram of a selective forwarding unit (SFU) in accordance with an embodiment of the present principles.
Figure 2 depicts a graphical representation of a probing technique that can be used to determine a bandwidth estimation between a subscriber peer connection module of the SFU and a respective subscriber in accordance with an embodiment of the present principles.
Figure 3 depicts a flow diagram of a method for full sender-side rate control in accordance with an embodiment of the present principles.
Figure 4 depicts a logic diagram of a method for updating a bandwidth/bitrate change of a publisher in accordance with an embodiment of the present principles.
Figure 5 depicts a computer system that can be used to implement an SFU of the present principles and the method of Figure 3 in accordance with an embodiment of the present principles.

To facilitate understanding, identical reference numerals have been used, where possible, to designate identical elements that are common to the figures. The figures are not drawn to scale and may be simplified for clarity. It is contemplated that elements and features of one embodiment may be beneficially incorporated in other embodiments without further recitation.

### DETAILED DESCRIPTION

Embodiments of the present principles generally relate to methods, apparatuses and systems for full sender-side rate control between, for example, data stream publishers, at least one Selective Forwarding Unit (SFU), and subscribers. While the concepts of the present principles are susceptible to various modifications and alternative forms, specific embodiments thereof are shown by way of example in the drawings and are described in detail below. It should be understood that there is no intent to limit the concepts of the present principles to the particular forms disclosed. On the contrary, the intent is to cover all modifications, equivalents, and alternatives consistent with the present principles and the appended claims. For example, although embodiments of the present principles will be described primarily with respect to specific media/data streams and specific numbers of publishers and subscribers, such teachings should not be considered limiting. Embodiments in accordance with the present principles can be applied to other similar data including any number of publishers and subscribers.

In the following description, the term selective forwarding unit (SFU) is used to describe and refer to an apparatus that selectively forwards media packets from a source (referred to as publisher or sender) to a receiver (referred to as subscriber or receiver) and performs as a media router.

In embodiments described herein, the term padding is used to describe and refer to bits or characters that fill up unused portions of a data structure, such as a field, packet or frame. In some embodiments, padding can be added at the end of a data structure. In some embodiments, padding can consist of 1 bits, blank characters, and/or null characters.

In the following description, the terms stream, data stream, media stream, and the like, are used interchangeably and are intended to refer to and describe data for which rate control can be determined using sender-side techniques in accordance with the present principles.

Embodiments of the present principles provide end-to-end rate control in communication systems including an SFU to improve the overall communication quality. In some embodiments, a sender-side rate-control strategy is implemented to transmit data from a publisher to a set of subscribers through an SFU in a "translator" topology architecture, which is an end-to-end rate-control fashion in which the SFU forwards all data received to subscribers, and the publisher adapts the transmission rate to a joint optimization metric based on a bandwidth capacity of an ensemble of subscribers.

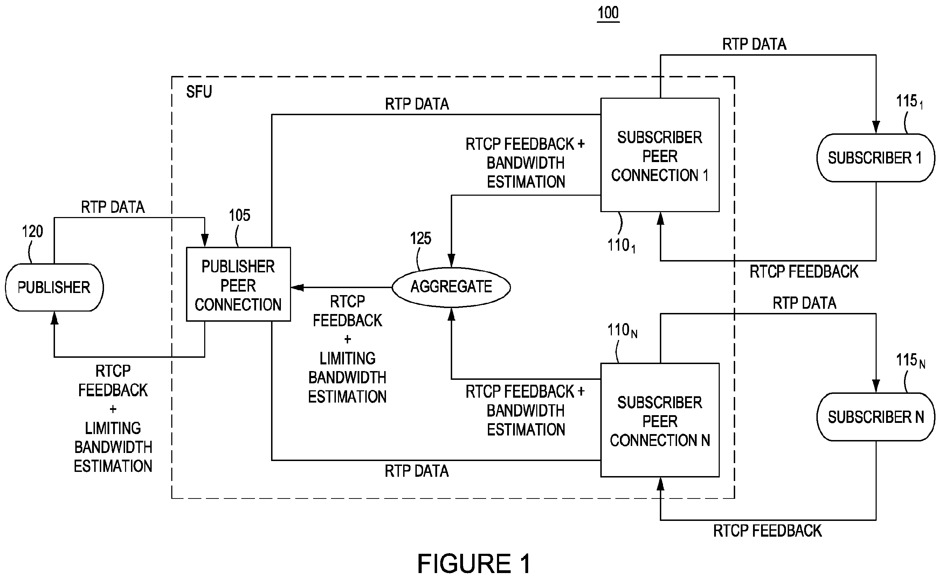

Figure 1 depicts a high-level block diagram of a selective forwarding unit (SFU) in accordance with an embodiment of the present principles. The SFU 100 of Figure 1 illustratively comprises a publisher peer connection module 105, a plurality of subscriber peer connection modules 110₁₋ₙ (illustratively two subscriber peer connection modules, respectively 110₁ and 110ₙ), one for each subscriber 115₁₋ₙ (illustratively two subscribers, respectively 115₁ and 115ₙ), and an aggregator module 125.

In the embodiment of Figure 1, the publisher peer connection module 105 receives a data stream from a publisher 120 and responds with Real-Time Transport Protocol (RTP) packets to assist in maintaining the communication active as well as to report to the subscriber 120 the status of and information regarding the communication. More specifically, in some embodiments of the present principles, sender-side rate control is used between the publisher 120 and the SFU 100. In such embodiments, the publisher peer connection module 105 of the SFU 100 replies to the publisher 120 with feedback that contains timings information for all the received RTP data packets from the subscriber 120. The publisher 120 then uses such information to calculate an appropriate bitrate to send to the SFU 100.

In the embodiment of Figure 1, each of the subscriber peer connection modules 110₁₋ₙ of the SFU 100 forwards the data stream from the publisher 120, that was received and processed by the publisher peer connection module 105 of the SFU 100, to a respective one of the subscribers 115₁₋ₙ and receives RTP feedback from each of the subscribers 115₁₋ₙ to control the data stream and report the status of the communication. More specifically, when subscribers join a communication on the side of the SFU 100, each of the subscriber peer connection modules 110₁₋ₙ uses the determined sender-side rate control to calculate an appropriate target bitrate, using known available sender-side strategies, such as probing, which reflects the bandwidth estimation between the SFU 100 and a respective subscriber for that connection. Such bandwidth estimation is built upon the feedback coming from each of the subscribers 115₁₋ₙ, along with other information such as packet loss, jitter, and so on reported by each of the subscribers 115₁₋ₙ. In the embodiments of the present principles, information regarding a bandwidth estimation determined for a communication path between the publisher 120 and the SFU 100 is considered when determining the bandwidth estimations for communication paths between the SFU 100 and the subscribers 115₁₋ₙ.

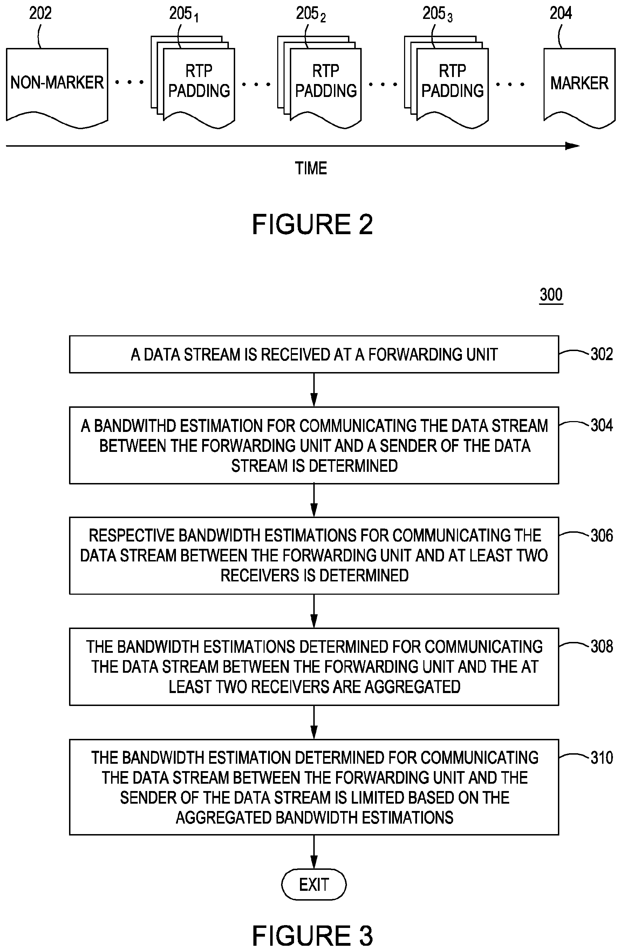

Figure 2 depicts a graphical representation of a probing technique that can be used to determine a bandwidth estimations between a subscriber peer connection module 110 of the SFU 100 and a respective subscriber 115 in accordance with an embodiment of the present principles. As depicted in Figure 2, a paced probing procedure of the present principles can included injecting (pacing) RTP Padding packets 205₁₋₃ (illustratively a burst of three (3) padding packets) between non-marker 202 and marker 204 packets of a communication between the SFU 100 and a respective subscriber 115 to artificially increase the data rate for a small and predefined amount of time to gather more information about the data channel. In some embodiments, the probing technique can include sending artificially-generated data at a much faster rate than a current bandwidth estimation to get information of the underlying network's state.

Once the bandwidth estimations are determined for each of the subscribers 115₁₋ₙ and the SFU 100 has a target bitrate for each of the subscribers 115₁₋ₙ determined using sender-side algorithms (including probing), the SFU 100 can apply an aggregation algorithm (e.g., the minimum of all the target bitrates) and generate a limiting message to the publisher, such as a Receiver Estimated Maximum Bitrate (REMB) message, informing the publisher 120 of a limiting bitrate value in the limiting message.

For example, in some embodiments for aggregation, an aggregator begins from a state where there aren't target bitrates and sends an initial estimation to a publisher. When a first subscriber(s) joins and a bandwidth estimation is determined, the determined bandwidth estimation is compared with any bandwidth limitation previously sent to the publisher. If the new bandwidth estimation is lower, that bandwidth estimation is communicated to the publisher as a new bandwidth limitation. * The previous process is repeated for all other subscribers' bandwidth estimations.

More specifically, in some embodiments, the bandwidth estimations determined for each of the subscribers 115₁₋ₙ can be communicated to the aggregator module 125. The aggregator module 125 uses the received bandwidth estimations determined for each of the subscribers 115₁₋ₙ to generate an aggregate bandwidth estimate representative of all of the subscribers 115₁₋ₙ. As described above, in some embodiments the aggregator module 125 can aggregate the bandwidth estimations determined for all of the subscribers 115₁₋ₙ by using a minimum of all the target bitrates.

Alternatively or in addition, in some embodiment, instead of using a minimum of all the target bitrates, the aggregator module 125 can implement other aggregation techniques including but not limited to an average aggregation, a median aggregation, a weighted average aggregation, a Harmonic mean aggregation, a geometric mean aggregation, and the like. For example, an average aggregation technique can include a calculation of an average value of the limitations. This is useful in instances in which the total estimation must reflect the entire set of subscribers and not the worst. A median aggregation technique can include a selection of a middle value of the limitations, which represents the value that separates the upper and lower half of the list. This is useful in instances in which it is beneficial to eliminate the effect of outliers that may bias the mean value. In a weighted average technique, a weighted average of the limitations is calculated, in which each limitation is weighted according to its importance. Such aggregation technique is useful when it is beneficial to give more importance to some subscribers over others. In a harmonic mean aggregation technique, the reciprocal of each limitation is calculated, the average of the reciprocals is calculated, and then the reciprocal of the average is taken. This technique is useful when it is beneficial to give more importance to smaller estimations over larger estimations, but outliers are still left out. In a geometric mean technique, the product of all the limitations is calculated, and then the nth root of the product is calculated, where n is the number of limitations samples. Such technique is useful when it is beneficial to avoid the distortion of averaging small and large values.

An aggregation/limitation message can then be generated by the aggregator module 125, which can be communicated to the publisher 120. The publisher 120 interprets a received aggregation/limitation message of the present principles, received from, for example, the aggregator module 125 as a hard-limitation on the values of bandwidth/bitrate that the publisher 120 can use between the publisher 120 and the SFU 100, thus reducing the effective possible dynamic range of the sender-side bandwidth estimation at the publisher's end, but still leveraging all the benefits from sender-side rate-control techniques. That is, in some embodiments of the present principles, the aggregator module 125 can communicate a bandwidth estimate report packet, for example, inside of a REMB message, to the publisher 120 to limit output bitrates available to the publisher 120 in accordance with the determined aggregate bandwidth determined by the aggregator module 125.

Figure 3 depicts a flow diagram of a method 300 for full sender-side rate control in accordance with an embodiment of the present principles. The method 300 can begin at 302 during which a data stream is received at a selective forwarding unit (SFU). The method 300 can proceed to 304.

At 304, a bandwidth estimation is determined for communicating the data stream between the SFU and a sender of the data stream. The method 300 can proceed to 306.

At 306, respective bandwidth estimations are determined for communicating the data stream between the SFU and at least two receivers. The method 300 can proceed to 308.

At 308, the bandwidth estimations determined for each of the at least two receivers are aggregated. The method 300 can proceed to 310.

At 310, the bandwidth estimation determined for the communication path between the SFU and the sender is limited based on the determined aggregation of bandwidth estimations. The method 300 can be exited.

As recited above, in some embodiments, the bandwidth estimations determined for each of the at least two receivers is limited by a bandwidth estimation determined for the sender.

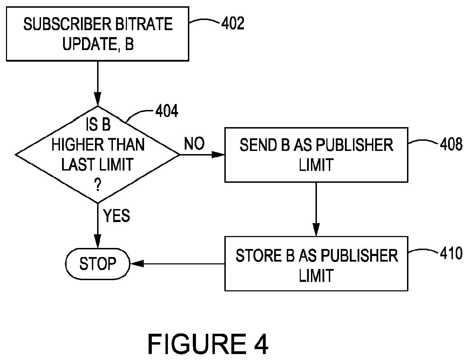

Bandwidth/bitrate estimation determined for at least one subscriber in accordance with the present principles is subject to fluctuations due to at least one of changes in the underlying network or factors external to the network. In some embodiments, an SFU of the present principles, such as the SFU 100 of Figure 1, can periodically limit a bandwidth estimation determined for a communication path between the publisher and the SFU based on at least updated information (e.g., RTP data) received from at least one receiver. For example, Figure 4 depicts a logic diagram of a method for updating a bandwidth/bitrate change of a publisher in accordance with an embodiment of the present principles. In the embodiment of Figure 4, an updated bandwidth/bitrate, b, of at least one receiver (e.g., a new joining receiver) is communicated to the SFU at 402. At 404, the SFU determines if the updated bandwidth/bitrate, b, is higher or lower than a previously determined bandwidth/bitrate. If the updated bandwidth/bitrate, b, is higher than a previously determined bandwidth/bitrate the SFU takes no action at 406. If the bandwidth/bitrate, b, is lower than a previously determined publisher bandwidth/bitrate, at 408 the SFU limits the bandwidth/bitrate of the publisher bandwidth/bitrate based on the updated bandwidth/bitrate, of at least one receiver to, for example, avoid degrading a quality of a user experiencing the data stream communicated to the SFU by the publisher. Alternatively or in addition, in some embodiments of the present principles, the updated, limited bandwidth of the publisher can be considered/taken into account when the SFU is determining a bandwidth estimate between the SFU and receivers in accordance with the present principles and as described above.

In some embodiments, at 410 the updated bandwidth/bitrate, b, is stored as a new publisher bandwidth estimation limitation to be compared to newly received bandwidth/bitrate estimates of, for example, new subscribers as described above. In accordance with embodiments of the present principles, periodically, a stored list can be revised and reports older than a configurable threshold can be discarded. That is, old reports may not depict the current network state anymore and, after that, the SFU can use the updated bandwidth/bitrate, b, to generate and send a new aggregate bandwidth estimate in accordance with embodiments of the present principles and as described above.

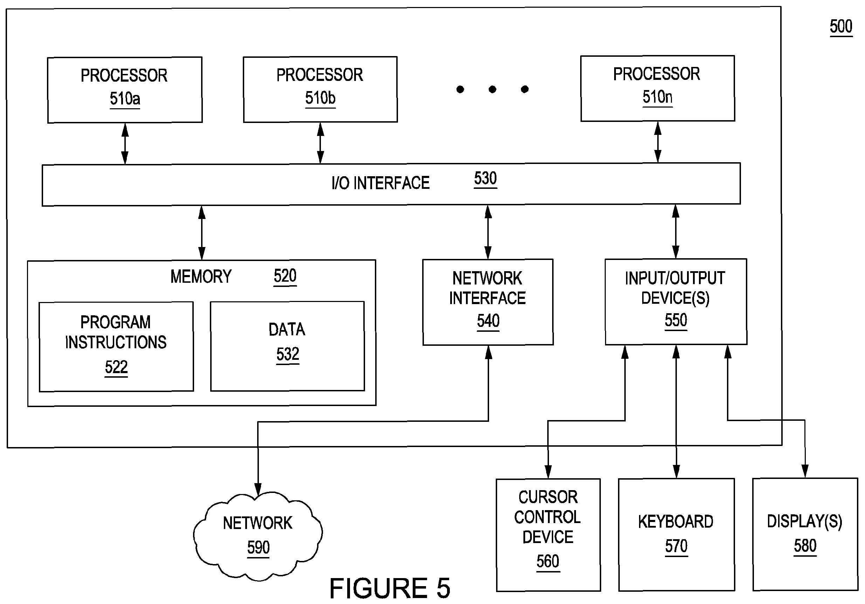

Figure 5 depicts a high-level block diagram of a computer system that can be used to implement an SFU of the present principles and the methods of Figure 3 in accordance with an embodiment of the present principles. That is, various embodiments of a method, apparatus and system for determining a padding boosting budget, as described herein, may be executed on one or more computer systems, which may interact with various other devices. One such computer system is computer system 500 illustrated by Figure 5, which may in various embodiments implement any of the elements or functionality illustrated in Figure 3. In various embodiments, computer system 500 may be configured to implement methods described above. The computer system 500 may be used to implement any other system, device, element, functionality or method of the above-described embodiments. In the illustrated embodiments, computer system 500 may be configured to implement method 300, as processor-executable executable program instructions 522 (e.g., program instructions executable by processor(s) 510) in various embodiments.

In the illustrated embodiment, computer system 500 includes one or more processors 510 coupled to a system memory 520 via an input/output (I/O) interface 530. Computer system 500 further includes a network interface 540 coupled to I/O interface 530, and one or more input/output devices 550, such as cursor control device 560, keyboard 570, and display(s) 580. In various embodiments, any of components may be utilized by the system to receive user input described above. In various embodiments, a user interface (e.g., user interface 530) may be generated and displayed on display 580. In some cases, it is contemplated that embodiments may be implemented using a single instance of computer system 500, while in other embodiments multiple such systems, or multiple nodes making up computer system 500, may be configured to host different portions or instances of various embodiments. For example, in one embodiment some elements may be implemented via one or more nodes of computer system 500 that are distinct from those nodes implementing other elements. In another example, multiple nodes may implement computer system 500 in a distributed manner.

In different embodiments, computer system 500 may be any of various types of devices, including, but not limited to, a personal computer system, desktop computer, laptop, notebook, or netbook computer, mainframe computer system, handheld computer, workstation, network computer, a camera, a set top box, a mobile device, a consumer device, video game console, handheld video game device, application server, storage device, a peripheral device such as a switch, modem, router, or in general any type of computing or electronic device.

In various embodiments, computer system 500 may be a uniprocessor system including one processor 510, or a multiprocessor system including several processors 510 (e.g., two, four, eight, or another suitable number). Processors 510 may be any suitable processor capable of executing instructions. For example, in various embodiments processors 510 may be general-purpose or embedded processors implementing any of a variety of instruction set architectures (ISAs), such as the x96, PowerPC, SPARC, or MIPS ISAs, or any other suitable ISA. In multiprocessor systems, each of processors 510 may commonly, but not necessarily, implement the same ISA.

System memory 520 may be configured to store program instructions 522 and/or data 532 accessible by processor 510. In various embodiments, system memory 520 may be implemented using any suitable memory technology, such as static random access memory (SRAM), synchronous dynamic RAM (SDRAM), nonvolatile/flash-type memory, persistent storage (magnetic or solid state), or any other type of memory. In the illustrated embodiment, program instructions and data implementing any of the elements of the embodiments described above may be stored within system memory 520. In other embodiments, program instructions and/or data may be received, sent or stored upon different types of computer-accessible media or on similar media separate from system memory 520 or computer system 500.

In one embodiment, I/O interface 530 may be configured to coordinate I/O traffic between processor 510, system memory 520, and any peripheral devices in the system, including network interface 540 or other peripheral interfaces, such as input/output devices 550. In some embodiments, I/O interface 530 may perform any necessary protocol, timing or other data transformations to convert data signals from one component (e.g., system memory 520) into a format suitable for use by another component (e.g., processor 510). In some embodiments, I/O interface 530 may include support for devices attached through various types of peripheral buses, such as a variant of the Peripheral Component Interconnect (PCI) bus standard or the Universal Serial Bus (USB) standard, for example. In some embodiments, the function of I/O interface 530 may be split into two or more separate components, such as a north bridge and a south bridge, for example. Also, in some embodiments some or all of the functionality of I/O interface 530, such as an interface to system memory 520, may be incorporated directly into processor 510.

Network interface 540 may be configured to allow data to be exchanged between computer system 500 and other devices attached to a network (e.g., network 590), such as one or more external systems or between nodes of computer system 500. In various embodiments, network 590 may include one or more networks including but not limited to Local Area Networks (LANs) (e.g., an Ethernet or corporate network), Wide Area Networks (WANs) (e.g., the Internet), wireless data networks, some other electronic data network, or some combination thereof. In various embodiments, network interface 540 may support communication via wired or wireless general data networks, such as any suitable type of Ethernet network, for example; via telecommunications/telephony networks such as analog voice networks or digital fiber communications networks; via storage area networks such as Fibre Channel SANs, or via any other suitable type of network and/or protocol.

Input/output devices 550 may, in some embodiments, include one or more display terminals, keyboards, keypads, touch pads, scanning devices, voice or optical recognition devices, or any other devices suitable for entering or accessing data by one or more computer systems 500. Multiple input/output devices 550 may be present in computer system 500 or may be distributed on various nodes of computer system 500. In some embodiments, similar input/output devices may be separate from computer system 500 and may interact with one or more nodes of computer system 500 through a wired or wireless connection, such as over network interface 540.

Those skilled in the art will appreciate that computer system 500 is merely illustrative and is not intended to limit the scope of embodiments. In particular, the computer system and devices may include any combination of hardware or software that can perform the indicated functions of various embodiments, including computers, network devices, Internet appliances, PDAs, wireless phones, pagers, etc. Computer system 500 may also be connected to other devices that are not illustrated, or instead may operate as a stand-alone system. In addition, the functionality provided by the illustrated components may in some embodiments be combined in fewer components or distributed in additional components. Similarly, in some embodiments, the functionality of some of the illustrated components may not be provided and/or other additional functionality may be available.

Those skilled in the art will also appreciate that, while various items are illustrated as being stored in memory or on storage while being used, these items or portions of them may be transferred between memory and other storage devices for purposes of memory management and data integrity. Alternatively, in other embodiments some or all of the software components may execute in memory on another device and communicate with the illustrated computer system via inter-computer communication. Some or all of the system components or data structures may also be stored (e.g., as instructions or structured data) on a computer-accessible medium or a portable article to be read by an appropriate drive, various examples of which are described above. In some embodiments, instructions stored on a computer-accessible medium separate from computer system 500 may be transmitted to computer system 500 via transmission media or signals such as electrical, electromagnetic, or digital signals, conveyed via a communication medium such as a network and/or a wireless link. Various embodiments may further include receiving, sending or storing instructions and/or data implemented in accordance with the foregoing description upon a computer-accessible medium or via a communication medium. In general, a computer-accessible medium may include a storage medium or memory medium such as magnetic or optical media, e.g., disk or DVD/CD-ROM, volatile or non-volatile media such as RAM (e.g., SDRAM, DDR, RDRAM, SRAM, etc.), ROM, etc.

The methods and processes described herein may be implemented in software, hardware, or a combination thereof, in different embodiments. In addition, the order of methods can be changed, and various elements can be added, reordered, combined, omitted or otherwise modified. All examples described herein are presented in a non-limiting manner. Various modifications and changes can be made as would be obvious to a person skilled in the art having benefit of this disclosure. Realizations in accordance with embodiments have been described in the context of particular embodiments. These embodiments are meant to be illustrative and not limiting. Many variations, modifications, additions, and improvements are possible Accordingly, plural instances can be provided for components described herein as a single instance. Boundaries between various components, operations and data stores are somewhat arbitrary, and particular operations are illustrated in the context of specific illustrative configurations. Other allocations of functionality are envisioned and can fall within the scope of claims that follow. Structures and functionality presented as discrete components in the example configurations can be implemented as a combined structure or component. These and other variations, modifications, additions, and improvements can fall within the scope of embodiments.

In the foregoing description, numerous specific details, examples, and scenarios are set forth in order to provide a more thorough understanding of the present disclosure. It will be appreciated, however, that embodiments of the disclosure can be practiced without such specific details. Further, such examples and scenarios are provided for illustration, and are not intended to limit the disclosure in any way. Those of ordinary skill in the art, with the included descriptions, should be able to implement appropriate functionality without undue experimentation.

References in the specification to "an embodiment," etc., indicate that the embodiment described can include a particular feature, structure, or characteristic, but every embodiment may not necessarily include the particular feature, structure, or characteristic. Such phrases are not necessarily referring to the same embodiment. Further, when a particular feature, structure, or characteristic is described in connection with an embodiment, it is believed to be within the knowledge of one skilled in the art to affect such feature, structure, or characteristic in connection with other embodiments whether or not explicitly indicated.

Embodiments in accordance with the disclosure can be implemented in hardware, firmware, software, or any combination thereof. Embodiments can also be implemented as instructions stored using one or more machine-readable media, which may be read and executed by one or more processors. A machine-readable medium can include any mechanism for storing or transmitting information in a form readable by a machine (e.g., a computing device or a "virtual machine" running on one or more computing devices). For example, a machine-readable medium can include any suitable form of volatile or non-volatile memory.

In addition, the various operations, processes, and methods disclosed herein can be embodied in a machine-readable medium and/or a machine accessible medium/storage device compatible with a data processing system (e.g., a computer system), and can be performed in any order (e.g., including using means for achieving the various operations). Accordingly, the specification and drawings are to be regarded in an illustrative rather than a restrictive sense. In some embodiments, the machine-readable medium can be a non-transitory form of machine-readable medium/storage device.

Modules, data structures, and the like defined herein are defined as such for ease of discussion and are not intended to imply that any specific implementation details are required. For example, any of the described modules and/or data structures can be combined or divided into sub-modules, sub-processes or other units of computer code or data as can be required by a particular design or implementation.

In the drawings, specific arrangements or orderings of schematic elements can be shown for ease of description. However, the specific ordering or arrangement of such elements is not meant to imply that a particular order or sequence of processing, or separation of processes, is required in all embodiments. In general, schematic elements used to represent instruction blocks or modules can be implemented using any suitable form of machine-readable instruction, and each such instruction can be implemented using any suitable programming language, library, application-programming interface (API), and/or other software development tools or frameworks. Similarly, schematic elements used to represent data or information can be implemented using any suitable electronic arrangement or data structure. Further, some connections, relationships or associations between elements can be simplified or not shown in the drawings so as not to obscure the disclosure.

## Claims

1. A method for full sender-side rate control, comprising:
receiving a data stream at a forwarding unit (100);
determining a bandwidth estimation for communicating the data stream between the forwarding unit and a sender (120) of the data stream;
determining respective bandwidth estimations for communicating the data stream between the forwarding unit and at least two receivers (115i - 115n) using the bandwidth estimation determined for communicating the data stream between the forwarding unit and the sender of the data stream;
aggregating the bandwidth estimations determined for communicating the data stream between the forwarding unit and the at least two receivers; and
limiting the bandwidth estimation determined for communicating the data stream between the forwarding unit and the sender of the data stream based on the aggregated bandwidth estimations.

2. The method of claim 1, wherein the bandwidth estimation for communicating the data stream between the forwarding unit and the sender of the data stream is determined using Real-Time Transport Protocol (RTP) data received from the sender of the data stream.

3. The method of claim 1, wherein the respective bandwidth estimations for communicating the data stream between the forwarding unit and the at least two receivers are determined using Real-Time Transport Protocol (RTP) data received from the at least two receivers.

4. The method of claim 3, wherein the respective bandwidth estimations for communicating the data stream between the forwarding unit and at least two receivers are determined by further using information regarding the bandwidth estimation determined for communicating the data stream between the forwarding unit and the sender.

5. The method of claim 1, wherein the bandwidth estimations determined for communicating the data stream between the forwarding unit and the at least two receivers are aggregated using an aggregating algorithm, which selects a minimum of the aggregated bandwidth estimations.

6. The method of claim 5, wherein the bandwidth estimation determined for communicating the data stream between the forwarding unit and the sender of the data stream is limited by the minimum of the aggregated bandwidth estimations.

7. The method of claim 1, wherein the bandwidth estimation determined for communicating the data stream between the forwarding unit and the sender of the data stream is limited by communicating a limitation message to the sender.

8. An apparatus for full sender-side rate control, comprising:
a processor (510); and
a memory (520) coupled to the processor, the memory having stored therein at least one of programs or instructions executable by the processor to configure the apparatus to:
receive a data stream at the apparatus;
determine a bandwidth estimation for communicating the data stream between the apparatus and a sender of the data stream;
determine respective bandwidth estimations for communicating the data stream between the apparatus and at least two receivers using the bandwidth estimation determined for communicating the data stream between the apparatus and the sender of the data stream;
aggregate the bandwidth estimations determined for communicating the data stream between the apparatus and the at least two receivers; and
limit the bandwidth estimation determined for communicating the data stream between the apparatus and the sender of the data stream based on the aggregated bandwidth estimations.

9. The apparatus of claim 8, wherein the bandwidth estimation for communicating the data stream between the apparatus and the sender of the data stream is determined using Real-Time Transport Protocol (RTP) data received from the sender of the data stream.

10. The apparatus of claim 8, wherein the respective bandwidth estimations for communicating the data stream between the apparatus and the at least two receivers are determined using Real-Time Transport Protocol (RTP) data received from the at least two receivers.

11. The apparatus of claim 10, wherein the respective bandwidth estimations for communicating the data stream between the apparatus and at least two receivers are determined by further using information regarding the bandwidth estimation determined for communicating the data stream between the apparatus and the sender.

12. The apparatus of claim 8, wherein the bandwidth estimations determined for communicating the data stream between the apparatus and the at least two receivers are aggregated using an aggregating algorithm, which selects a minimum of the aggregated bandwidth estimations.

13. The apparatus of claim 12, wherein the bandwidth estimation determined for communicating the data stream between the apparatus and the sender of the data stream is limited by the minimum of the aggregated bandwidth estimations.

14. The apparatus of claim 8, wherein the bandwidth estimation determined for communicating the data stream between the apparatus and the sender of the data stream is limited by communicating a limitation message to the sender.

## Patentansprüche

1. Verfahren zur vollständigen sensorseitigen Ratensteuerung, umfassend:
Empfangen eines Datenflusses an einer Weiterleitungseinheit (100);
Bestimmen einer Bandbreitenschätzung zum Übermitteln des Datenflusses zwischen der Weiterleitungseinheit und einem Sensor (120) des Datenflusses;
Bestimmen der jeweiligen Bandbreitenschätzungen zum Übermitteln des Datenflusses zwischen der Weiterleitungseinheit und wenigstens zwei Empfängern (115i - 115n) unter Verwenden der Bandbreitenschätzung, die zum Übermitteln des Datenflusses zwischen der Weiterleitungseinheit und dem Sender des Datenflusses bestimmt wird;
Aggregieren der Bandbreitenschätzungen, die zum Übermitteln des Datenflusses zwischen der Weiterleitungseinheit und den wenigstens zwei Empfängern bestimmt werden; und
Begrenzen der Bandbreitenschätzung, die zum Übermitteln des Datenflusses zwischen der Weiterleitungseinheit und dem Sender des Datenflusses auf der Grundlage der aggregierten Bandbreitenschätzungen bestimmt wird.

2. Verfahren nach Anspruch 1, wobei die Bandbreitenschätzung zum Übermitteln des Datenflusses zwischen der Weiterleitungseinheit und dem Sender des Datenflusses unter Verwenden von Real-Time-Transport-Protocol-Daten (RTP-Daten), die vom Sender des Datenflusses empfangen werden, bestimmt wird.

3. Verfahren nach Anspruch 1, wobei die jeweiligen Bandbreitenschätzungen zum Übermitteln des Datenflusses zwischen der Weiterleitungseinheit und den wenigstens zwei Empfängern unter Verwenden von Real-Time-Transport-Protocol-Daten (RTP-Daten), die von wenigstens zwei Empfängern empfangen werden, bestimmt werden.

4. Verfahren nach Anspruch 3, wobei die jeweiligen Bandbreitenschätzungen zum Übermitteln des Datenflusses zwischen der Weiterleitungseinheit und wenigstens zwei Empfängern durch weiteres Verwenden von Informationen bezüglich der Bandbreitenschätzung, die zum Übermitteln des Datenflusses zwischen der Weiterleitungseinheit und dem Sender bestimmt wird, bestimmt werden.

5. Verfahren nach Anspruch 1, wobei die Bandbreitenschätzungen, die zum Übermitteln des Datenflusses zwischen der Weiterleitungseinheit und den wenigstens zwei Empfängern bestimmt werden, unter Verwenden eines Aggregierungsalgorithmus, der ein Minimum der aggregierten Bandbreitenschätzungen auswählt, aggregiert werden.

6. Verfahren nach Anspruch 5, wobei die Bandbreitenschätzung, die zum Übermitteln des Datenflusses zwischen der Weiterleitungseinheit und dem Sender des Datenflusses bestimmt wird, durch das Minimum der aggregierten Bandbreitenschätzungen begrenzt wird.

7. Verfahren nach Anspruch 1, wobei die Bandbreitenschätzung, die zum Übermitteln des Datenflusses zwischen der Weiterleitungseinheit und dem Sender des Datenflusses bestimmt wird, durch Übermitteln einer Begrenzungsmeldung an den Sender begrenzt wird.

8. Vorrichtung für eine vollständige sensorseitige Ratensteuerung, umfassend:
einen Prozessor (510); und
einen Speicher (520), der an den Prozessor gekoppelt ist, wobei der Speicher wenigstens eines von Programmen oder Anweisungen, die vom Prozessor zum Konfigurieren der Vorrichtung ausführbar ist/sind, darin gespeichert aufweist, um:
einen Datenfluss an der Vorrichtung zu empfangen;
eine Bandbreitenschätzung zum Übermitteln des Datenflusses zwischen der Vorrichtung und einem Sender des Datenflusses zu bestimmen;
jeweilige Bandbreitenschätzungen zum Übermitteln des Datenflusses zwischen der Vorrichtung und wenigstens zwei Empfängern unter Verwenden der Bandbreitenschätzung, die zum Übermitteln des Datenflusses zwischen der Vorrichtung und dem Sender des Datenflusses bestimmt ist, zu bestimmen;
die Bandbreitenschätzungen, die zum Übermitteln des Datenflusses zwischen der Vorrichtung und den wenigstens zwei Empfängern bestimmt sind, zu aggregieren; und
die Bandbreitenschätzung, die zum Übermitteln des Datenflusses zwischen der Vorrichtung und dem Sender des Datenflusses auf der Grundlage der aggregierten Bandbreitenschätzungen bestimmt ist, zu aggregieren.

9. Vorrichtung nach Anspruch 8, wobei die Bandbreitenschätzung zum Übermitteln des Bandbreitenflusses zwischen der Vorrichtung und dem Sender des Datenflusses unter Verwenden von Real-Time-Transport-Protocol-Daten (RTP-Daten), die vom Sender des Datenflusses empfangen sind, bestimmt ist.

10. Vorrichtung nach Anspruch 8, wobei die jeweiligen Bandbreitenschätzungen zum Übermitteln des Datenflusses zwischen der Vorrichtung und den wenigstens zwei Empfängern unter Verwenden von Real-Time-Transport-Protocol-Daten (RTP-Daten), die von den wenigstens zwei Empfängern empfangen sind, bestimmt sind.

11. Vorrichtung nach Anspruch 10, wobei die jeweiligen Bandbreitenschätzungen zum Übermitteln des Datenflusses zwischen der Vorrichtung und wenigstens zwei Empfängern weiterhin durch Verwenden von Informationen bezüglich der Bandbreitenschätzung, die zum Übermitteln des Datenflusses zwischen der Vorrichtung und dem Sender bestimmt ist, bestimmt sind.

12. Vorrichtung nach Anspruch 8, wobei die Bandbreitenschätzungen, die zum Übermitteln das Datenflusses zwischen der Vorrichtung und den wenigstens zwei Empfängern bestimmt sind, unter Verwenden eines Aggregierungsalgorithmus, der ein Minimum der aggregierten Bandbreitenschätzungen auswählt, aggregiert sind.

13. Vorrichtung nach Anspruch 12, wobei die Bandbreitenschätzung, die zum Übermitteln des Datenflusses zwischen der Vorrichtung und dem Sender des Datenflusses bestimmt ist, durch das Minimum der aggregierten Bandbreitenschätzungen begrenzt ist.

14. Vorrichtung nach Anspruch 8, wobei die Bandbreitenschätzung, die zum Übermitteln des Datenflusses zwischen der Vorrichtung und dem Sender des Datenflusses bestimmt ist, durch Übermitteln einer Begrenzungsmeldung an den Sender begrenzt ist.

## Revendications

1. Procédé de limitation intégrale de débit côté émetteur, comprenant :
la réception d'un flux de données au niveau d'une unité de transfert (100) ;
la détermination d'une estimation de la bande passante pour la communication du flux de données entre l'unité de transfert et un émetteur (120) du flux de données ;
la détermination des estimations de bande passante respectives pour la communication du flux de données entre l'unité de transfert et au moins deux récepteurs (115i-115n), en utilisant l'estimation de bande passante déterminée pour la communication du flux de données entre l'unité de transfert et l'émetteur du flux de données ;
l'agrégation des estimations de bande passante déterminées pour la communication du flux de données entre l'unité de transfert et au moins deux récepteurs ;
la limitation de l'estimation de bande passante déterminée pour la communication du flux de données entre l'unité de transfert et l'émetteur du flux de données, sur la base des estimations de bande passante agrégées.

2. Procédé selon la revendication 1, dans lequel l'estimation de bande passante pour la communication du flux de données entre l'unité de transfert et l'émetteur du flux de données est déterminée en utilisant des données du protocole RTP (Real-Time Transport Protocol) reçues de l'émetteur du flux de données.

3. Procédé selon la revendication 1, dans lequel les estimations de bande passante respectives pour la communication du flux de données entre l'unité de transfert et au moins deux récepteurs sont déterminées en utilisant des données du protocole RTP (Real-Time Transport Protocol) reçues des au moins deux récepteurs.

4. Procédé selon la revendication 3, dans lequel les estimations de bande passante respectives pour la communication du flux de données entre l'unité de transfert et au moins deux récepteurs sont déterminées en utilisant en outre les informations relatives à l'estimation de bande passante déterminée pour la communication du flux de données entre l'unité de transfert et l'émetteur.

5. Procédé selon la revendication 1, dans lequel les estimations de bande passante déterminées pour la communication du flux de données entre l'unité de transfert et au moins deux récepteurs sont agrégées à l'aide d'un algorithme d'agrégation, qui sélectionne une valeur minimale des estimations de bande passante agrégées.

6. Procédé selon la revendication 5, dans lequel l'estimation de bande passante déterminée pour la communication du flux de données entre l'unité de transfert et l'émetteur du flux de données est limitée par la valeur minimale des estimations de bande passante agrégées.

7. Procédé selon la revendication 1, dans lequel l'estimation de bande passante déterminée pour la communication du flux de données entre l'unité de transfert et l'émetteur du flux de données est limitée par la communication d'un message de limitation à l'émetteur.

8. Appareil de limitation intégrale de débit côté émetteur, comprenant :
un processeur (510) ; et
une mémoire (520) couplée au processeur, la mémoire renfermant au moins un programme ou une instruction exécutable par le processeur pour configurer l'appareil afin de :
recevoir un flux de données au niveau de l'appareil ;
déterminer une estimation de bande passante pour la communication du flux de données entre l'appareil et un émetteur du flux de données ;
déterminer les estimations de bande passante respectives pour la communication du flux de données entre le dispositif et au moins deux récepteurs, en utilisant l'estimation de bande passante déterminée pour la communication du flux de données entre l'appareil et l'émetteur du flux de données ;
agréger les estimations de bande passante déterminées pour la communication du flux de données entre l'appareil et les au moins deux récepteurs ; et
limiter l'estimation de bande passante déterminée pour la communication du flux de données entre l'appareil et l'émetteur du flux de données sur la base des estimations de bande passante agrégées.

9. Appareil selon la revendication 8, dans lequel l'estimation de bande passante pour la communication du flux de données entre l'appareil et l'émetteur est déterminée en utilisant des données RTP (Real-Time Transport Protocol) reçues de l'émetteur du flux de données.

10. Appareil selon la revendication 8, dans lequel les estimations de bande passante respectives pour la communication du flux de données entre l'appareil et au moins deux récepteurs sont déterminées en utilisant des données RTP (Real-Time Transport Protocol) reçues d'au moins deux récepteurs.

11. Appareil selon la revendication 10, dans lequel les estimations de bande passante respectives pour la communication du flux de données entre l'appareil et au moins deux récepteurs sont déterminées en utilisant en outre les informations relatives à l'estimation de bande passante déterminée pour la communication du flux de données entre l'appareil et l'émetteur.

12. Appareil selon la revendication 8, dans lequel les estimations de bande passante déterminées pour la communication du flux de données entre l'appareil et au moins deux récepteurs sont agrégées à l'aide d'un algorithme d'agrégation qui sélectionne une valeur minimale des estimations de bande passante agrégées.

13. Appareil selon la revendication 12, dans lequel l'estimation de bande passante déterminée pour la communication du flux de données entre l'appareil et l'émetteur du flux de données est limitée par la valeur minimale des estimations de bande passante agrégées.

14. Appareil selon la revendication 8, dans lequel l'estimation de bande passante déterminée pour la communication du flux de données entre l'appareil et l'émetteur du flux de données est limitée par la communication d'un message de limitation à l'émetteur.
